# FASCICULE DE BREVET EUROPEEN

(11) **EP 3 908 775 B1**
(45) Date de publication et mention de la délivrance du brevet: **25.06.2025**
(21) Numéro de dépôt: 20705406.5
(22) Date de dépôt: 07.01.2020
(51) Int. Cl.: F16K 31/06, F16K 1/12, F16K 47/04, F16K 47/08

(54) **VANNE DE CIRCULATION DE FLUIDE ET SYSTEME DE TRAITEMENT THERMIQUE POUR VEHICULE COMPRENANT UNE TELLE VANNE**
FLUIDZIRKULATIONSVENTIL UND THERMISCHES BEHANDLUNGSSYSTEM FÜR EIN FAHRZEUG MIT EINEM SOLCHEN VENTIL
FLUID CIRCULATION VALVE AND THERMAL TREATMENT SYSTEM FOR A VEHICLE COMPRISING SUCH A VALVE

(30) Priorité: 08.01.2019 FR 1900161
(43) Date de publication de la demande: 17.11.2021
(73) Titulaire: Valeo Systemes Thermiques, 78320 Le Mesnil-Saint-Denis (FR)
(72) Inventeur: KARL, Stefan, 78322 LE MESNIL SAINT-DENIS CEDEX (FR); YAHIA, Mohamed, 78322 LE MESNIL SAINT-DENIS CEDEX (FR); LIU, Jin-Ming, 78322 LE MESNIL SAINT-DENIS CEDEX (FR); NICOLAS, Bertrand, 78322 LE MESNIL SAINT-DENIS CEDEX (FR); AKIKI, Roland, 78322 LE MESNIL SAINT-DENIS CEDEX (FR)
(74) Mandataire: Valeo Systèmes Thermiques
(86) Numéro de dépôt international: PCT/FR2020/050015
(87) Numéro de publication internationale: WO 2020/144427

(56) Documents cités:
- EP-A1- 1 316 750
- EP-B1- 1 316 750
- US-A- 4 216 938
- US-A- 4 350 319
- US-A- 4 535 815

## Description

L'invention concerne une vanne de circulation de fluide et un système de traitement thermique pour véhicule, notamment pour véhicule automobile, comprenant une telle vanne.

Le réchauffement climatique ainsi que le tarissement des sources d'énergies fossiles poussent aujourd'hui les constructeurs automobiles à investir dans le développement de véhicules moins polluants et moins consommateurs de carburants traditionnels. Ainsi, ces dernières années ont vu émerger de nouveaux véhicules fonctionnant, au moins partiellement, grâce à l'énergie électrique.

Ces véhicules, qu'ils soient totalement électriques ou bien hybrides, c'est-à-dire combinant l'utilisation d'un moteur thermique et d'un moteur électrique, nécessitent donc un approvisionnement en énergie électrique conséquent et sont équipés de dispositifs de stockage électrique, comportant généralement plusieurs modules de batteries.

Ces modules de batteries supportent mal de fonctionner en dehors d'une plage de températures déterminées. Afin d'optimiser le fonctionnement et la durée de vie de ces dernières, il convient ainsi de les maintenir à une température inférieure à 45°C par exemple. Pour cela, il est connu d'utiliser un circuit de fluide réfrigérant, par ailleurs utilisé pour chauffer ou refroidir différentes zones ou différents composants du véhicule.

L'une des phases de fonctionnement des modules de batteries au cours de laquelle ils doivent être refroidis est leur phase de charge. Une nouvelle technique de charge a fait son apparition récemment. Elle consiste à charger le dispositif de stockage électrique sous une tension et un ampérage élevés, de manière à charger le dispositif de stockage électrique en un temps maximum de quelques dizaines de minutes. Cette charge rapide implique un échauffement du dispositif de stockage électrique qui impose un dimensionnement plus important du/des échangeur(s) de chaleur destiné(s) à la régulation thermique du dispositif de stockage électrique. Toutefois, si le besoin en refroidissement du dispositif de stockage électrique est très important lors des phases de charge rapide, ce besoin diminue lors de phases de roulage ou de charge dite « classique ». L'utilisation d'un échangeur de chaleur surdimensionné est alors inutilement consommateur d'énergie ainsi que générateur de poids et/ou d'encombrement. De plus, si le besoin de refroidissement du dispositif de stockage est faible et que dans le même temps le besoin de refroidissement de l'habitacle du véhicule est important, il peut s'avérer difficile de contrôler la puissance de refroidissement de ce dispositif de stockage électrique.

Il a déjà été proposé dans une demande de brevet de la déposante, non publiée à la date de dépôt de la présente demande, une solution permettant de moduler le refroidissement du dispositif de stockage électrique en fonction de ses besoins tout en respectant un écart de température imposé par la température d'un flux d'air pulsé dans l'habitacle. Il s'agit donc de moduler une puissance de refroidissement sous un écart de température fixe.

Pour cela, le circuit de fluide réfrigérant utilisé pour le refroidissement des modules de batterie comprend au moins un dispositif de compression, un premier échangeur thermique destiné à être traversé par un flux d'air extérieur à un habitacle du véhicule, un organe de détente et plusieurs échangeurs de chaleur destinés au refroidissement des modules de batterie. En outre, ces derniers sont aptes à être alimentés en fluide réfrigérant indépendamment les uns des autres, à l'aide de vannes dédiées.

Ledit circuit comprend de la sorte un grand nombre de vannes et il existe un besoin de disposer d'une vanne présentant un coût limité tout en étant adaptée aux conditions spécifiques d'une telle utilisation, en particulier le haut niveau de pression du fluide réfrigérant. Il faut ainsi disposer d'une vanne capable de rester étanche vis-à-vis de l'extérieur. Il a été par ailleurs été mis en évidence par le déposant que, dans une telle utilisation, la différence de pression du fluide en amont et en aval de la vanne est relativement faible, de l'ordre de quelques centaines de millibars. Les contraintes liées au degré d'étanchéité que les vannes devront offrir pour éviter un écoulement du fluide en aval du circuit, en position fermé de la vanne, sont donc limitées.

L'invention a pour objectif de tirer parti de cette constatation et propose à cette fin une vanne de circulation de fluide selon la revendication 1, ladite vanne comprenant un boîtier et un corps de circulation du fluide, ledit corps étant situé au moins en partie dans ledit boîtier, ledit corps étant fixé au boîtier et présentant un passage de fluide entre ledit corps et ledit boitier, ladite vanne comprenant en outre un organe de commande actionnable de façon électromagnétique, ledit organe de commande étant mobile par rapport audit corps pour sélectivement ouvrir ou fermer ledit passage, ledit corps présentant au moins localement une configuration tubulaire au niveau dudit passage, ledit organe de commande étant apte à coulisser le long dudit corps au moins au niveau dudit passage.

Même si le mouvement coulissant prévu pour ouvrir ou fermer la vanne n'est pas le plus à même d'assurer une étanchéité forte vis-à-vis de l'écoulement du fluide dans le circuit en position fermée de la vanne, on a vu plus haut que, au moins dans l'application visée, cela ne porte pas à conséquence. Parallèlement, un tel mouvement présente de nombreux avantages. Tout d'abord, cela limite la force à appliquer à l'organe de commande pour le déplacer de sa position fermée à sa position ouverte. En effet, l'organe de commande peut être baigné dans le fluide tout en faisant en sorte que les pressions qui s'appliquent de part et d'autre de l'organe de commande s'équilibrent, au moins en partie. Les efforts à vaincre pour le déplacer sont donc limités. En outre, la configuration proposée permet de ne pas avoir recours à des vannes dont la position fermée est déterminée par l'appui de leur organe de commande sur un siège. On évite de la sorte les inconvénients associés tels que l'usure du siège et le bruit généré par les chocs de l'organe de commande contre le siège.

Par ailleurs, l'utilisation d'un organe de commande actionnable de façon électromagnétique permet de déplacer celui-ci à distance depuis l'extérieur du boîtier et favorise de la sorte l'étanchéité de la vanne vis-à-vis de l'extérieur par rapport à des vannes comprenant un arbre devant déboucher à travers le boîtier pour entraîner l'organe commandant l'ouverture/fermeture de la circulation du fluide. On peut encore constater que la mise en œuvre d'un mouvement coulissant de l'organe de commande et la nature électromagnétique de son actionnement favorise la réalisation d'une vanne de configuration simple.

Le document EP 1 316 750 A1 divulgue une vanne de circulation de fluide connue.

Selon différentes caractéristiques de l'invention qui pourront être prises ensemble ou séparément, selon toute combinaison techniquement possible et limitées par les revendications annexées:
- ledit organe de commande est situé entre le boîtier et ledit corps,
- ledit boîtier est fait d'une pièce unique,
- ladite vanne est munie d'une première entrée/sortie, en particulier une entrée, de fluide,
- ladite vanne est munie d'une seconde entrée/sortie, en particulier une sortie, de fluide,
- ledit corps débouche dudit boîtier au niveau d'une partie, dite débouchante,
- ladite partie débouchante est munie de ladite première entrée/sortie de fluide,
- ledit organe de commande comprend un fourreau,
- ledit fourreau est cylindrique,
- ledit corps comprend un manchon, muni dudit passage,
- ledit fourreau et ledit manchon sont coaxiaux,
- le fourreau entoure le manchon,
- un jeu est présent entre le fourreau et le boîtier,
- ledit boîtier et ledit corps sont coaxiaux,
- ledit organe de commande comprend un matériau magnétique,
- ladite vanne comprend un enroulement d'excitation de l'organe de commande,
- l'enroulement d'excitation entoure extérieurement ledit boîtier,
- le boîtier et l'enroulement d'excitation sont coaxiaux,
- ladite vanne comprend en outre un ressort de rappel permettant de ramener ledit organe de commande en position de repos,
- ladite position de repos est une position d'ouverture du passage,
- ladite position de repos est une position de fermeture du passage,
- ledit organe de commande et ledit ressort de rappel sont dans le prolongement axial l'un de l'autre,
- ladite vanne comprend un ressort de stabilisation de l'organe de commande,
- ledit organe de commande et ledit ressort de stabilisation sont dans le prolongement axial l'un de l'autre,
- ledit ressort de rappel et ledit ressort de stabilisation sont situés de part et d'autre de l'organe de commande,
- ledit passage est situé sur une paroi latérale du corps,
- ledit passage comprend un ou des orifices,
- lesdits orifices sont diamétralement opposés,
- ledit manchon est fermé à l'une de ses extrémités longitudinales, dite borgne, située dans ledit boîtier,
- ledit passage est situé à proximité de ladite extrémité borgne,
- l'extrémité opposée du manchon définit ladite première entrée/sortie de la vanne,
- ladite vanne comprend une tubulure d'entrée/sortie, en particulier de sortie, pour le fluide, insérée dans ledit boîtier,
- ladite tubulure est située à distance dudit corps,
- ladite tubulure est dans le prolongement axial dudit corps,
- le diamètre de la tubulure est égal au diamètre du corps,
- l'axe du corps forme un angle compris entre 130° et 180° avec l'axe de la tubulure,
- ladite vanne comprend un ensemble monobloc définissant ledit manchon et ladite tubulure,
- ledit ensemble monobloc est formé d'un tube,
- ledit tube comprend une cloison interne, permettant de séparer un volume interne du manchon et un volume interne de la tubulure,
- ladite tubulure comprend un ou des orifices de circulation du fluide débouchant dans ledit boîtier,
- ledit organe de commande et/ou ledit corps est muni d'une pluralité d'ouvertures de circulation du fluide permettant une ouverture progressive du passage lors d'un déplacement dudit organe de commande,
- lesdites ouvertures de passage sont calibrées pour permettre une détente du fluide,
- ladite vanne comprend une ou des bagues d'étanchéité entre ledit corps et ledit organe de commande,
- ledit boîtier, ledit corps et/ou ladite tubulure sont en matériau thermoplastique,
- ladite vanne comprend une liaison de matière fixant l'un à l'autre ledit boîtier, ledit corps et/ou ladite tubulure.

L'invention concerne également un système de traitement thermique pour véhicule, notamment pour véhicule automobile, comprenant au moins une vanne telle que décrite plus haut.

D'autres objets, caractéristiques et avantages de l'invention apparaîtront plus clairement dans la description qui suit, faite en référence aux figures annexées, dans lesquelles :
- La figure 1 illustre de façon schématique selon un plan de coupe longitudinal un premier exemple de réalisation d'une vanne conforme à l'invention, en configuration ouverte,
- La figure 2 reprend la figure 1, la vanne étant cette fois en configuration fermée,
- La figure 3 illustre de façon schématique selon un plan de coupe longitudinal un deuxième exemple de réalisation d'une vanne conforme à l'invention, en configuration fermée,
- La figure 4 reprend la figure 3, la vanne étant cette fois en configuration ouverte,
- La figure 5 illustre de façon schématique selon un plan de coupe longitudinal un troisième exemple de réalisation d'une vanne conforme à l'invention, en configuration ouverte,
- La figure 6 reprend la figure 5, la vanne étant cette fois en configuration fermée,
- La figure 7 illustre de façon schématique selon un plan de coupe longitudinal un quatrième exemple de réalisation d'une vanne conforme à l'invention, dans une configuration supplémentaire,
- La figure 8 illustre de façon schématique selon un plan de coupe longitudinal un cinquième exemple de réalisation d'une vanne conforme à l'invention, dans une configuration supplémentaire,
- La figure 9 illustre de façon schématique un exemple de système de traitement thermique conforme à l'invention.

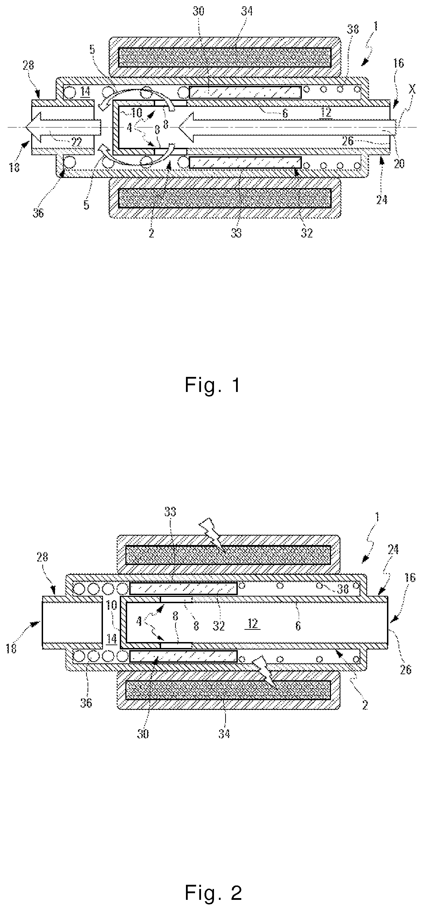

Comme illustré aux figures 1 et 2, l'invention concerne une vanne de circulation de fluide. Ledit fluide est, par exemple, un fluide réfrigérant.

Ladite vanne comprend un boîtier 1 et un corps 2 de circulation du fluide. Ledit corps 2 est situé au moins en partie dans ledit boîtier 1. Ledit corps 2 présente un passage 4 de fluide entre ledit corps 2 et ledit boitier 1, selon les flèches repérées 5 (figure 1). Ledit corps 2 est fixé au boîtier 1.

Ledit corps 2 présente au moins localement une configuration tubulaire au niveau dudit passage. Ici, ledit corps 2 s'étend selon un axe longitudinal X et présente une configuration tubulaire sur toute sa longueur. Ledit corps 2 présente avantageusement une forme de révolution autour dudit axe longitudinal X. Ledit corps 2 est formé, par exemple, d'un manchon 6.

Ledit passage 4 est situé sur une paroi latérale du corps 2, en particulier une paroi latérale dudit manchon 6. Ledit passage 4 comprend un ou des orifices 8, notamment des orifices 8 de même section et diamétralement opposés. Lesdits orifices 8 sont par exemple au nombre de deux. Ils pourront être de section circulaire ou de toute autre forme.

Ici, ledit manchon 6 est fermé à l'une 10 de ses extrémités longitudinales, dite borgne, située dans ledit boîtier 1. Ledit passage 4, en particulier lesdits orifices 8, sont situés à proximité de ladite extrémité borgne 10.

Ledit boîtier 1 présente avantageusement une forme de révolution, notamment autour de l'axe longitudinale X. Autrement dit, ledit boîtier 1 et ledit corps 2 sont préférentiellement coaxiaux.

Pris en combinaison, ledit boîtier 1 et ledit corps 2 forment au moins deux chambres de circulation de fluide, à savoir une première chambre 12 située à l'intérieur du corps 2 et une deuxième chambre 14, située entre le corps 2 et ledit boîtier 1. En outre, la première chambre 12 et la deuxième chambre 14 communiquent entre elles par l'intermédiaire du passage de fluide 4. Ledit passage 4 débouche radialement d'une part dans ladite première chambre 12 et d'autre part dans ladite deuxième chambre 14.

Ladite vanne est munie d'une entrée 16 et d'une sortie 18 de fluide. Ainsi, le fluide entre dans la vanne selon la flèche repérée 20, passe à travers le passage 4 et sort de la vanne selon la flèche repérée 22, en position ouverte de la vanne (figure 1).

Ici, ledit corps 2 débouche dudit boîtier 1 au niveau d'une partie 24, dite débouchante. Ladite partie débouchante 24 est avantageusement munie de ladite entrée de fluide 16. Plus précisément, l'extrémité longitudinale 26 du manchon 6, opposée à son extrémité borgne 10, définit l'entrée 16 de la vanne. Autrement dit, le manchon 6 est ouvert au niveau de son extrémité longitudinale 26 située dans la partie débouchante 24.

Ladite vanne comprend une tubulure 28 de sortie du fluide. Ladite tubulure 28 est insérée dans ledit boîtier 1, de façon fixe. Ladite tubulure 28 est située à distance dudit corps 1 de sorte que ladite tubulure 28 débouche à l'une de ses extrémités longitudinales dans le boîtier 1 au niveau de la deuxième chambre 14 et à l'extérieur au niveau de l'extrémité longitudinale opposée, par la sortie 18. Ainsi, le fluide, provenant du passage 4 traverse la deuxième chambre 14 et pénètre dans la tubulure de sortie 28 d'où il sort de la vanne.

Le sens de circulation du fluide exposé dans l'exemple illustré favorise un auto-nettoyage de la vanne. Cependant, une circulation en sens inverse est également possible tout en restant conforme à l'invention.

Ici, ladite tubulure 28 est dans le prolongement axial dudit manchon 6. Le diamètre de la tubulure 28 est avantageusement égal au diamètre du manchon 6. En variante non illustrée, l'axe longitudinal du manchon 6 pourra former un angle compris entre 130° et 180° avec un axe longitudinal de la tubulure 28.

Avantageusement, ledit boîtier 1 est fait d'une pièce unique. Ceci favorise l'étanchéité de la vanne par rapport à l'extérieur. Il pourra s'agir, notamment, d'une pièce en matériau thermoplastique, par exemple moulée. Ledit corps 2 et/ou ladite tubulure 28 pourront aussi être en matériau thermoplastique. Ils sont fixés audit boîtier 1 par une liaison de matière. Ceci garantit l'étanchéité par rapport à l'extérieur. Il pourra s'agir, par exemple, d'un soudage par friction, d'un soudage laser ou d'un collage.

Pour son ouverture/fermeture, la vanne comprend en outre un organe de commande 30. Ledit organe de commande 30 est mobile par rapport audit corps 2 pour sélectivement ouvrir ou fermer ledit passage 4. Pour cela, ledit organe de commande est apte à coulisser le long dudit corps 2 au moins au niveau dudit passage 4. Prévoir le passage 4 au niveau du corps 2 et faire coulisser l'organe de commande 30 le long dudit corps 2 permet à l'organe de commande 30 de laisser ouvert ou de fermer le passage 4 sans avoir à venir en butée contre une autre pièce, tout en offrant une étanchéité suffisante, au moins dans les applications dans lesquelles la différence de pression en amont et en aval dans le circuit équipé reste limitée.

Cela étant pour améliorer une telle étanchéité, ladite vanne pourra comprendre une ou des bagues d'étanchéité entre ledit corps 2 et ledit organe de commande 30, tel que cela sera développé plus bas.

Ledit organe de commande 30 est préférentiellement situé entre le boîtier 1 et ledit corps 2. Autrement dit, ledit organe de commande 30 est situé dans ladite deuxième chambre 14. Ledit organe de commande est ainsi mobile à l'intérieur de ladite deuxième chambre 14.

Ledit organe de commande est par exemple formé d'un fourreau 32, coulissant sur ledit manchon 6. Ledit fourreau 32 est cylindrique. Le fourreau 32 entoure le manchon 6. Ledit fourreau 32 et ledit manchon 6 sont préférentiellement coaxiaux avec un jeu calibré pour permettre le coulissement du fourreau 32 le long du manchon 6 tout en assurant l'étanchéité désirée, en position fermé de la vanne, c'est-à-dire, lorsque le fourreau 32 recouvre le ou les orifices 8 de passage de fluide formés dans le manchon 6.

Un autre jeu est en outre avantageusement présent entre l'organe de commande 30, en particulier le fourreau 32, et le boîtier 1. Il permet au fluide de passer de chaque côté axial du fourreau 32, en limitant les effets de piston. On bénéficie de la sorte d'un équilibrage de pression sur l'ensemble d'une surface externe du fourreau 32. L'effort à fournir pour déplacer l'organe de commande 30 est donc limité. De façon alternative ou complémentaire, des canaux de passage de fluide pourront être prévues axialement de part et d'autre de l'organe de commande, notamment en déformant la surface du boîtier 1, par exemple en lui donnant un aspect ondulé, lesdits canaux s'étendant le long dudit axe longitudinal X tout en étant distant les uns des autres angulairement autour dudit axe longitudinal X.

On peut noter que disposer d'orifices 8 de passage de fluide de même section et situés de façon régulière angulairement autour de l'axe longitudinale contribue également à un équilibrage de la pression appliquée à l'organe de commande 30.

Ledit organe de commande 30, en particulier ledit fourreau 32, est avantageusement actionnable de façon électromagnétique. Une telle caractéristique permet de le commander à distance. Elle est donc favorable à l'étanchéité du boîtier 1 par rapport à l'extérieur. Pour cela, ledit organe de commande 30 est formé ou à tout le moins comprend un matériau magnétique.

Pour l'actionnement dudit organe de commande 30, ladite vanne comprend préférentiellement un enroulement d'excitation 34. Il s'agit par exemple d'une bobine électrique, parcourue, ou non, par un courant électrique. Lorsque ledit enroulement d'excitation 34 est parcouru par un courant, il crée un champ magnétique qui déplace ledit organe de commande 30 selon la direction de l'axe longitudinal X. Dans l'exemple illustré, l'enroulement d'excitation 34 entoure extérieurement ledit boîtier 1. Ils sont coaxiaux.

Ladite vanne comprend en outre un ressort de rappel 36 permettant de ramener ledit organe de commande 30 en position de repos. Ledit fourreau 32 et ledit ressort de rappel 36 sont dans le prolongement axial l'un de l'autre. Ledit ressort de rappel 36 est ici un ressort hélicoïdal. Il prend appui d'une part sur le fourreau 32 et d'autre part sur une extrémité longitudinale dudit boîtier 1.

Dans l'exemple illustré aux figures 1 et 2, ladite position de repos du ressort de rappel 36 est une position d'ouverture du passage 4. Plus précisément, comme illustré à la figure 1, lorsque l'enroulement d'excitation 34 n'est pas alimenté, le ressort de rappel 36 est au repos et le passage 4 est ouvert. A l'inverse, comme illustré à la figure 2, lorsque l'enroulement d'excitation 34 est alimenté en courant, le passage 4 est fermé et le ressort de rappel 36 est comprimé.

Ladite vanne comprend en outre un ressort de stabilisation 38 de l'organe de commande 30. Il sert à éviter que l'organe de commande ne bouge lorsque l'enroulement d'excitation 36 n'est pas alimenté en courant et que le ressort de rappel 36 est en position de repos. Ledit fourreau 32 et ledit ressort de stabilisation 38 sont dans le prolongement axial l'un de l'autre. Ledit ressort de stabilisation 38 est ici un ressort hélicoïdal. Il prend appui d'une part sur le fourreau 32 et d'autre part sur une extrémité longitudinale dudit boîtier 1, opposée à celle sur laquelle le ressort de rappel 36 prend appui.

Ledit ressort de rappel 36 et ledit ressort de stabilisation 38 sont situés de part et d'autre de l'organe de commande 30. Préférentiellement, lorsque l'un travaille en extension, l'autre travaille en compression et inversement. Le ressort de rappel 36 est ici autour d'une partie du manchon 6 comprenant le passage 4 et autour de la tubulure de sortie 28.

La disposition de l'organe de commande 30, du ressort de rappel 36 et du ressort de stabilisation 38 permet de contrôler de façon stable la position de l'organe de commande 30 dans une position comprise entre une position de fermeture du passage de fluide et une position d'ouverture maximale du passage de fluide. En effet, le contrôle du courant électrique circulant dans la bobine permet de contrôler la force électromagnétique appliquée à l'élément de contrôle 30. La position d'équilibre de l'organe de commande 30 résulte de l'équilibre entre la force magnétique, les forces exercées par le ressort de rappel 36 et le ressort de stabilisation 38, ainsi que les forces de frottement mécanique et fluidique. Un contrôle adéquat du courant électrique parcourant la bobine de commande permet ainsi d'obtenir une fermeture totale, une ouverture totale ou encore une ouverture partielle de la vanne.

Le déplacement de l'organe de commande 30 se fait sans chocs mécaniques, puisque à aucun moment l'organe de commande 30 ne vient en appui contre un siège ou une butée. En effet, le ressort de rappel 36 est interposé entre une extrémité axiale du fourreau 32 et une extrémité du boitier 1, tandis que le ressort de stabilisation 38 est disposé entre l'autre extrémité axiale du fourreau 32 et l'autre extrémité du boitier 1. La vanne a ainsi un fonctionnement particulièrement silencieux. L'absence de chocs mécaniques sur l'organe de commande 30 améliore également la fiabilité de la vanne. De plus, en jouant sur la raideur respective du ressort de stabilisation et du ressort de rappel, ainsi que sur leur précontrainte, il est possible d'ajuster l'effort magnétique nécessaire au déplacement de l'organe de commande. Il est ainsi possible d'obtenir une vanne dans laquelle la raideur de l'ensemble formé par les deux ressorts en opposition est faible, tout en faisant appel à des ressorts aux caractéristiques standard. Il est ainsi possible d'utiliser un actionneur magnétique générant seulement un faible effort. Le coût de la vanne peut ainsi être limité.

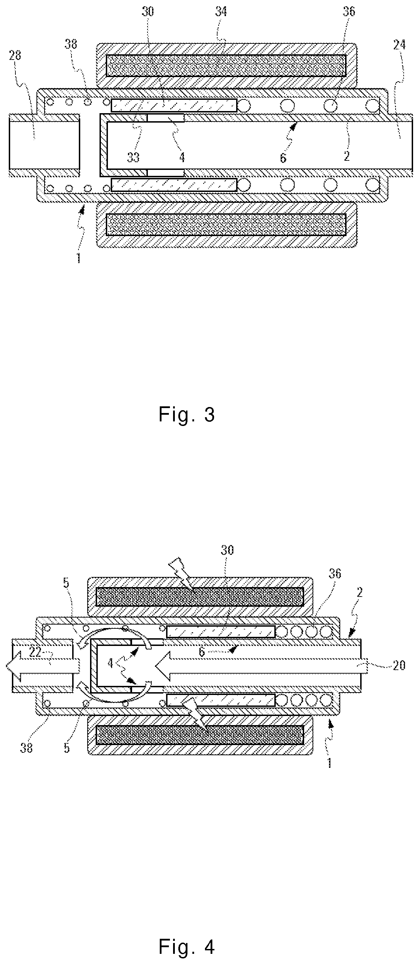

Comme illustré aux figures 3 et 4, en variante, ladite position de repos du ressort de rappel 36 est une position de fermeture du passage 4. Plus précisément, comme illustré à la figure 3, lorsque l'enroulement d'excitation 34 n'est pas alimenté, le ressort de rappel 36 est au repos et le passage 4 est fermé. A l'inverse, comme illustré à la figure 4, lorsque l'enroulement d'excitation 34 est alimenté en courant, le passage 4 est ouvert et le ressort de rappel 36 est comprimé. Ledit ressort de rappel 36 est situé autour du manchon 6, dans sa partie ne comprenant pas le passage 4. Pour le reste, la vanne de ce mode de réalisation est préférentiellement identique à celle du mode de réalisation des figures 1 et 2. En particulier, ledit ressort de rappel 36 est comprimé lorsque l'orifice de passage 4 est ouvert.

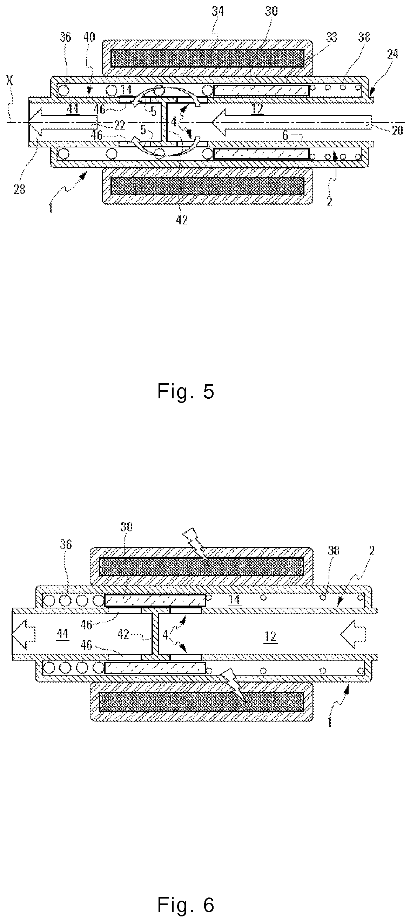

Comme illustré aux figures 5 et 6, en variante, ladite vanne comprend un ensemble monobloc définissant ledit manchon 6 et ladite tubulure 28. Pour le reste, la vanne de mode de réalisation est préférentiellement identique à celle du mode de réalisation des figures 1 et 2, c'est-à-dire avec un passage 4 fermé lorsque l'enroulement d'excitation est alimenté. En variante, elle pourra aussi être identique, pour le reste, à la vanne du mode de réalisation des figures 3 et 4.

Ledit ensemble monobloc est formé, par exemple, d'un tube 40, notamment orienté selon l'axe longitudinale X du boîtier 1. Ledit tube 40 comprend une cloison interne 42, permettant de séparer un volume interne du manchon 6, correspondant à la première chambre 12 et un volume interne de la tubulure 28, formant une troisième chambre 44, en communication avec ladite deuxième chambre 14. Cette dernière s'étend alors entre le tube 40 et le boîtier 1 de façon torique.

Pour permettre la circulation du fluide de ladite deuxième chambre 14 à ladite troisième chambre 44, ledit tube comprend au niveau de ladite tubulure 28 un ou des orifices de circulation du fluide 46 débouchant radialement.

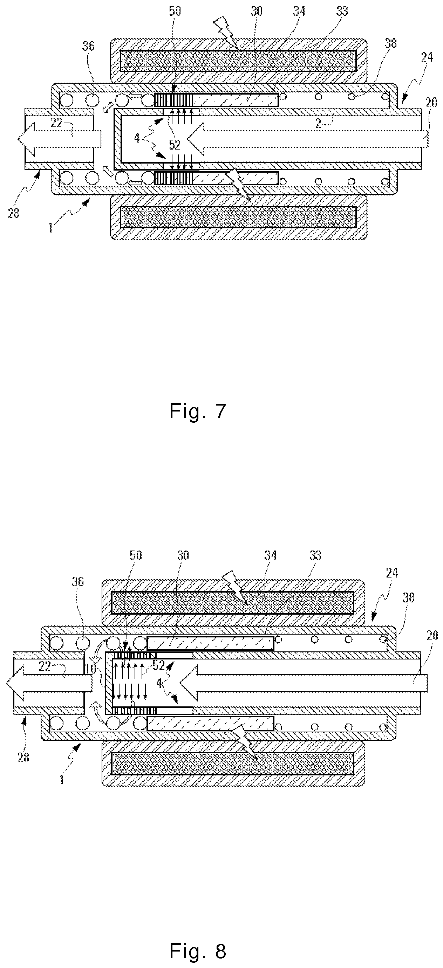

Dans le mode de réalisation illustré sur les figures 7 et 8, ledit organe de commande 30 et/ou ledit corps 2 est muni d'une pluralité d'ouvertures 50 de circulation du fluide permettant une ouverture progressive du passage lors du déplacement dudit organe de commande 30. Le fluide traverse lesdites ouvertures selon les flèches repérées 52. Lesdites ouvertures de passage 50 sont avantageusement calibrées pour permettre une détente du fluide La section de passage du fluide augmente progressivement à mesure que de plus en plus d'ouvertures 50 sont découvertes et permettent le passage du fluide. Cette détente progressive permet par exemple d'équilibrer les débits de réfrigérant passant en parallèle dans les multiples canaux d'un échangeur de chaleur ou passant dans différents échangeurs de chaleur. La température peut ainsi être contrôlée de façon plus homogène.

Une autre application possible de ce principe est la création d'une détente réglable en fonction de la force électromagnétique appliquée. Cette force électromagnétique est sensiblement proportionnelle au courant électrique qui passe dans la bobine d'excitation 34. En contrôlant le courant de commande de la vanne, il est possible de maintenir l'organe de commande 30 dans n'importe quelle position intermédiaire entre la position de fermeture du passage 4 de fluide et la position d'ouverture maximale du passage 4. Autrement dit, l'organe de commande 30 est configuré pour être maintenu de manière stable dans une position intermédiaire entre une position d'ouverture maximale et une position de fermeture. Le nombre d'ouvertures de passage 50 libres et permettant le passage du fluide à travers la vanne peut ainsi être modulé.

Il est ainsi possible d'obtenir différents niveaux de détente du fluide réfrigérant. Cela permet de moduler la puissance frigorifique générée par le ou les échangeurs de chaleur alimentés par la vanne.

A la figure 7, lesdites ouvertures 50 sont situées sur l'organe de commande 30. Elles sont destinées à être positionnées en vis-à-vis du passage 4 en un emplacement intermédiaire de l'organe de commande 30. Ledit emplacement intermédiaire de l'organe de commande 30 est situé entre son emplacement d'ouverture du passage 4 et son emplacement de fermeture du passage 4. Pour le reste, la vanne ce mode de réalisation est identique à celle du mode de réalisation des figures 1 et 2.

Ici, en position de repos, l'enroulement d'excitation 34 n'est pas alimenté et l'organe de commande est dans son emplacement où le passage 4 est ouvert. Lorsque l'enroulement d'excitation 34 est alimenté, l'organe de commande 30 quittent l'emplacement précédent et se déplace axialement de sorte que les ouvertures 50 passent devant le passage 4 et l'organe de commande 30 continue sa course jusqu'à ce que le passage 4 soit fermé, les ouvertures 50 n'étant plus alors devant le passage 4. Le mouvement inverse est suivi lors de l'ouverture du passage 6 une fois que l'organe d'excitation 34 n'est plus alimenté. Il est possible d'immobiliser les ouvertures 50 devant le passage 4, par exemple en modulant le courant d'alimentation dans l'enroulement d'excitation 34. Cette modulation du courant d'alimentation permet alors de réduire progressivement le nombre d'ouvertures 50 qui se trouvent en vis à vis du passage 4. Le résultat est une réduction progressive de la section de passage du fluide. Dans cette configuration représentée sur la figure 7, on obtient alors, en plus de la fonction ouverture / fermeture une fonction de détente variable du fluide, obtenue en contrôlant le courant électrique traversant l'enroulement d'excitation de la bobine.

A la figure 8, lesdites ouvertures 50 sont sur le corps 2. Elles sont plus précisément situées, axialement, entre son extrémité borgne 10 et le passage 6.

De manière similaire à la configuration présentée sur la figure 7, une modulation du courant d'alimentation permet de déplacer l'organe de commande 30 vers la position de fermeture du passage de fluide 4, à gauche sur la figure 8. Les ouvertures 50 sont ainsi progressivement obstruées. Une réduction progressive de la section de passage du fluide est ainsi obtenue. Cette configuration permet ainsi d'obtenir, en plus de la fonction ouverture / fermeture du passage de fluide, une fonction de détente variable en contrôlant le courant électrique traversant l'enroulement de la bobine de commande.

Comme déjà indiqué, ladite vanne pourra comprendre une ou des bagues d'étanchéité, non-illustrées, entre ledit corps 2 et ledit organe de commande 30. Elles sont situées, par exemple, de part et d'autre du passage 4. Elles pourront être positionnées dans des gorges ménagées dans le manchon 6, au niveau d'une paroi extérieure de celui-ci. Elles s'étendent radialement de sorte à venir en contact avec une paroi intérieure du fourreau 32.

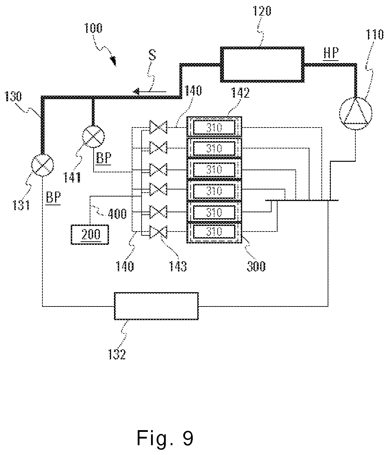

Comme illustré à la figure 9, l'invention concerne aussi un système 100 de traitement thermique pour véhicule, notamment pour véhicule automobile, comprenant des vannes 143 telles que décrites plus haut.

Ledit système comprend par exemple un dispositif de compression 110, un premier échangeur thermique 120 destiné à être traversé par un flux d'air extérieur à un habitacle du véhicule, un premier organe de détente 141 et plusieurs deuxièmes échangeurs de chaleur 142, destinés ici au refroidissement de modules de batterie 310 d'un dispositif de stockage d'énergie électrique 300. Chacun desdits deuxièmes échangeurs 142 de chaleur est disposé sur une première branche respective 140 du système de sorte à être parcouru par le fluide réfrigérant, en parallèle et indépendamment les uns des autres. Chacune desdites premières branches comprend l'une des vannes 143. Ainsi, le fluide réfrigérant circule, ou non, dans lesdits deuxièmes échangeurs 142 en fonction de l'état ouvert ou fermé de la vanne 143 correspondante. Un module de commande 200 permet de piloter le fonctionnement de l'ensemble des vannes 143. Pour cela, le module de commande 200 est électriquement connecté à chacune des vannes 143 par des câbles électriques 400. Le module de commande 200 comporte autant de sorties de commande que de vannes 143. Le module de commande 200 permet ainsi de commander chaque vanne 143 indépendamment les unes des autres. Il est ainsi possible de contrôler le débit traversant chaque vanne de manière indépendante. Chaque vanne peut être complètement fermée, complètement ouverte ou bien ouverte à une valeur de consigne intermédiaire.

Avantageusement, le module de commande 200 pilote également le fonctionnement des organes de détente 131 et 141.

Ledit système pourra comprendre, en parallèle du premier détendeur 141 et des premières branches 140 une deuxième branche comprenant un deuxième détendeur 131 et un troisième échangeur de chaleur 132, apte à refroidir un flux d'air destiné à pénétrer dans l'habitacle du véhicule.

Bien sûr la vanne conforme à l'invention pourra être employée dans tout autre type d'applications.

## Revendications

1. Vanne de circulation de fluide, ladite vanne comprenant un boîtier (1) et un corps (2) de circulation du fluide, ledit corps (2) étant situé au moins en partie dans ledit boîtier (1), ledit corps (2) étant fixé au boîtier (1) et présentant un passage (4) de fluide entre ledit corps (2) et ledit boitier (1), le corps (2) comprend un manchon (6) muni dudit passage (4), ladite vanne comprenant en outre un organe de commande (30) actionnable de façon électromagnétique, ledit organe de commande (30) étant mobile par rapport audit corps (2) pour sélectivement ouvrir ou fermer ledit passage (4), ledit corps (2) présentant au moins localement une configuration tubulaire au niveau dudit passage (4), ledit organe de commande (30) étant apte à coulisser le long dudit corps (2) au moins au niveau dudit passage (4), la vanne comprenant en outre un ressort de rappel (36) permettant de ramener ledit organe de commande (30) en position de repos et un ressort de stabilisation (38) de l'organe de commande (30), ledit ressort de rappel (36) et ledit ressort de stabilisation (38) étant situés de part et d'autre de l'organe de commande (30), **caractérisée en ce que** la vanne comprend une tubulure de sortie (28) pour le fluide, insérée dans le boîtier (1) et dans le prolongement axial du corps (2), le ressort de rappel (36) est autour d'une partie du manchon (6) comprenant le passage (4) et autour de la tubulure de sortie (28).

2. Vanne selon la revendication 1 dans laquelle ledit organe de commande (30) est situé entre le boîtier (1) et ledit corps (2).

3. Vanne selon l'une quelconque des revendications précédentes dans laquelle ledit boîtier (1) est fait d'une pièce unique.

4. Vanne selon l'une quelconque des revendications précédentes dans lequel ledit passage (4) est situé sur une paroi latérale du corps (2).

5. Vanne selon l'une quelconque des revendications précédentes dans laquelle ledit organe de commande (30) comprend un fourreau (32) et dans laquelle ledit corps (2) comprend un manchon (6), muni dudit passage (4), ledit fourreau (32) et ledit manchon (6) étant coaxiaux.

6. Vanne selon la revendication précédente dans laquelle ledit manchon (6) est fermé à l'une de ses extrémités longitudinales (10), dite borgne, située dans ledit boîtier (1).

7. Vanne selon la revendication 5 comprenant une tubulure (28) d'entrée/sortie, en particulier de sortie, pour le fluide, insérée dans ledit boîtier (1), ladite vanne comprenant un ensemble monobloc définissant ledit manchon (6) et ladite tubulure (28), ledit ensemble monobloc étant formé d'un tube (40), ledit tube (40) comprend une cloison interne (42), permettant de séparer un volume interne du manchon (6) et un volume interne de la tubulure (28), ladite tubulure (28) comprenant un ou des orifices (46) de circulation du fluide débouchant dans ledit boîtier (1).

8. Vanne selon l'une quelconque des revendications précédentes ledit organe de commande (30) et/ou ledit corps (2) est muni d'une pluralité d'ouvertures (50) de circulation du fluide permettant une ouverture progressive du passage lors d'un déplacement dudit organe de commande, lesdites ouvertures de passage (50) étant calibrées pour permettre une détente du fluide.

9. Système de traitement thermique pour véhicule, notamment pour véhicule automobile, comprenant au moins une vanne selon l'une quelconque des revendications précédentes.

## Patentansprüche

1. Fluidzirkulationsventil, wobei das Ventil ein Gehäuse (1) und einen Fluidzirkulationskörper (2) umfasst, wobei der Körper (2) mindestens teilweise in dem Gehäuse (1) angeordnet ist, wobei der Körper (2) an dem Gehäuse (1) befestigt ist und einen Durchgang (4) für Fluid zwischen dem Körper (2) und dem Gehäuse (1) aufweist, wobei der Körper (2) eine Hülse (6) mit dem Durchgang (4) umfasst, wobei das Ventil ferner ein elektromagnetisch betätigbares Steuerglied (30) umfasst, wobei das Steuerglied (30) relativ zu dem Körper (2) beweglich ist, um den Durchgang (4) selektiv zu öffnen oder zu schließen, wobei der Körper (2) mindestens lokal eine rohrförmige Konfiguration auf der Höhe des Durchgangs (4) aufweist, wobei das Steuerglied (30) entlang des Körpers (2) mindestens auf der Höhe des Durchgangs (4) gleiten kann, wobei das Ventil ferner eine Rückholfeder (36) zum Zurückführen des Steuerglieds (30) in eine Ruheposition und eine Stabilisierungsfeder (38) des Steuerglieds (30) umfasst, wobei die Rückholfeder (36) und die Stabilisierungsfeder (38) beiderseits des Steuerglieds (30) angeordnet sind, **dadurch gekennzeichnet, dass** das Ventil ein Auslassrohr (28) für das Fluid umfasst, das in das Gehäuse (1) und in die axiale Verlängerung des Körpers (2) eingesetzt ist, wobei die Rückholfeder (36) um einen Teil der Hülse (6), der den Durchgang (4) umfasst, und um das Auslassrohr (28) herum angeordnet ist.

2. Ventil nach Anspruch 1, wobei das Steuerglied (30) zwischen dem Gehäuse (1) und dem Körper (2) angeordnet ist.

3. Ventil nach einem der vorhergehenden Ansprüche, wobei das Gehäuse (1) einstückig ausgebildet ist.

4. Ventil nach einem der vorhergehenden Ansprüche, wobei der Durchgang (4) an einer Seitenwand des Körpers (2) angeordnet ist.

5. Ventil nach einem der vorhergehenden Ansprüche, wobei das Steuerglied (30) eine Hülse (32) umfasst und wobei der Körper (2) eine Hülse (6) mit dem Durchgang (4) umfasst, wobei die Hülse (32) und die Hülse (6) koaxial sind.

6. Ventil nach dem vorhergehenden Anspruch, wobei die Hülse (6) an einem ihrer Längsenden (10), dem sogenannten blinden Ende, das sich in dem Gehäuse (1) befindet, geschlossen ist.

7. Ventil nach Anspruch 5, umfassend ein Einlass/Auslassrohr (28), insbesondere ein Auslassrohr, für das Fluid, das in das Gehäuse (1) eingesetzt ist, wobei das Ventil eine monolithische Baugruppe umfasst, die die Hülse (6) und das Rohr (28) definiert, wobei die monolithische Baugruppe aus einem Rohr (40) gebildet ist, wobei das Rohr (40) eine innere Trennwand (42) umfasst, die es ermöglicht, ein Innenvolumen der Hülse (6) und ein Innenvolumen des Rohrs (28) zu trennen, wobei das Rohr (28) eine oder mehrere in das Gehäuse (1) mündende Fluidzirkulationsöffnungen (46) umfasst.

8. Ventil nach einem der vorhergehenden Ansprüche, wobei das Steuerglied (30) und/oder der Körper (2) mit einer Vielzahl von Fluidzirkulationsöffnungen (50) versehen ist, die eine progressive Öffnung des Durchgangs während einer Verschiebung des Steuerglieds ermöglichen, wobei die Durchgangsöffnungen (50) kalibriert sind, um eine Fluiddruckreduktion zu ermöglichen.

9. Wärmebehandlungssystem für ein Fahrzeug, insbesondere für ein Kraftfahrzeug, umfassend mindestens ein Ventil nach einem der vorhergehenden Ansprüche.

## Claims

1. Fluid circulation valve, said valve comprising a housing (1) and a body (2) for fluid circulation, said body (2) being situated at least partially within said housing (1), said body (2) being fixed to the housing (1) and having a passage (4) for fluid between said body (2) and said housing (1), the body (2) comprising a sleeve (6) having said passage (4), said valve further comprising an electromagnetically actuatable control member (30), said control member (30) being movable relative to said body (2) to selectively open or close said passage (4), said body (2) presenting at least locally a tubular configuration at the level of said passage (4), said control member (30) being capable of sliding along said body (2) at least at the level of said passage (4), the valve further comprising a return spring (36) for returning said control member (30) to a rest position and a stabilization spring (38) of the control member (30), said return spring (36) and said stabilization spring (38) being situated on either side of the control member (30), **characterized in that** the valve comprises an outlet tube (28) for the fluid, inserted in the housing (1) and in the axial extension of the body (2), the return spring (36) being around a portion of the sleeve (6) comprising the passage (4) and around the outlet tube (28).

2. Valve according to claim 1 wherein said control member (30) is located between the housing (1) and said body (2).

3. Valve according to any one of the preceding claims wherein said housing (1) is made of a single piece.

4. Valve according to any one of the preceding claims wherein said passage (4) is located on a lateral wall of the body (2).

5. Valve according to any one of the preceding claims wherein said control member (30) comprises a sleeve (32) and wherein said body (2) comprises a sleeve (6), provided with said passage (4), said sleeve (32) and said sleeve (6) being coaxial.

6. Valve according to the preceding claim wherein said sleeve (6) is closed at one of its longitudinal ends (10), called blind end, situated in said housing (1).

7. Valve according to claim 5 comprising an inlet/outlet tube (28), particularly an outlet tube, for the fluid, inserted in said housing (1), said valve comprising a monobloc assembly defining said sleeve (6) and said tube (28), said monobloc assembly being formed of a tube (40), said tube (40) comprising an internal partition (42), allowing to separate an internal volume of the sleeve (6) and an internal volume of the tube (28), said tube (28) comprising one or more orifices (46) for fluid circulation opening into said housing (1).

8. Valve according to any one of the preceding claims wherein said control member (30) and/or said body (2) is provided with a plurality of fluid circulation openings (50) allowing a progressive opening of the passage during a displacement of said control member, said passage openings (50) being calibrated to allow fluid pressure reduction.

9. Thermal treatment system for a vehicle, particularly for a motor vehicle, comprising at least one valve according to any one of the preceding claims.
